# EUROPÄISCHE PATENTANMELDUNG

(11) **EP 1 796 038 A2**
(43) Veröffentlichungstag der Anmeldung: **13.06.2007**
(21) Anmeldenummer: 06024674.1
(22) Anmeldetag: 29.11.2006
(51) Int. Cl.: G06T 7/00, G06T 5/00, H04N 5/00

(54) **Verfahren und Einrichtung zur Stabilisierung von digitalen Bildsequenzen nach einer bildgeschützten Transformationsvorschrift**

(30) Priorität: 07.12.2005 DE 102005058394
(71) Anmelder: Rheinmetall Defence Electronics GmbH, 28309 Bremen (DE)
(72) Erfinder: Gabler, Richard, 76316 Malsch (DE)
(74) Vertreter: Thul, Hermann

(57) **Zusammenfassung**

Das erfindungsgemäße Verfahren und seine technische Ausführung ermöglicht auch für Bildsequenzen kontrastarmen Inhalts eine zuverlässige Bildstabilisierung. Das neue Verfahren zur Bildstabilisierung stützt sich nicht mehr, wie bisher üblich, auf eine Zuordnung von Bildbereichen, sondern verzichtet auf die Auswahl markanter Bildregionen. Stattdessen stützt es sich auf das gesamte Bild, wobei Modifikationen möglich sind. Beim neuen Verfahren wird das gesamte Bild einem ersten Zeitpunkts Pixel für Pixel untersucht und ermittelt, wie gut eine um das jeweils betrachtete Pixel herum zentrierte Nachbarschaftsregion jeweils mit verschieden verschobenen Nachbarschaftsregionen des nächsten Bildes zu einem nächsten Zeitpunkt übereinstimmt. Im Gegensatz zur Vorgehensweise nach dem Stand der Technik wird bei der neuen Technik nicht das Maximum der Übereinstimmung gesucht und dann die zugehörige Verschiebung weiter betrachtet, sondern es werden alle Korrelationswerte, die sich bei der Untersuchung der Nachbarschaftsregion eines Pixels ergeben, weiterverwendet. Hierzu wird eine Hilfsmatrix angelegt, die zunächst mit Null initialisiert wird. Für jedes Pixel werden die sich bei der Ähnlichkeitsuntersuchung des entsprechenden Nachbarschaftsbereichs ergebenden Korrelationswerte in dieser Hilfsmatrix aufaddiert. Nachdem Pixel für Pixel das gesamte Bild untersucht und jeweils die Hilfsmatrix entsprechend aktualisiert wurde, wird die Hilfsmatrix ausgewertet.

Es wird ermittelt, welche dem gesamten Bild entsprechende Verschiebung vorliegt. Hierzu wird das Maximum der Hilfsmatrix und die hierzu entsprechende Verschiebung gesucht.

Die ermittelte Verschiebung drückt die Transformation des Bildes von einem ersten Zeitpunkt zum Bild des nächsten Zeitpunkts aus und steht dann für eine Nutzung durch z. B. automatische Verfahren zur Verfügung.

## Beschreibung

Die Erfindung betrifft ein Verfahren und eine Einrichtung zur Stabilisierung von Bildsequenzen eines bildgebenden Sensors. Eine Stabilisierung von Bildsequenzen ist notwendig oder zumindest vorteilhaft, wenn ein Sensor nicht starr ausgerichtet ist, sondern Bewegungen ausgesetzt wird. Derartige Bewegungen treten auf, wenn der Sensor mit einem bewegten Träger verbunden ist (z. B. eine fahrende, fliegende oder schwimmende Plattform) oder wenn der Sensor absichtlichen oder unabsichtlichen Schwenk- oder Zitterbewegungen ausgesetzt wird.

Vorhandene Verfahren zur Stabilisierung von Bildsequenzen arbeiten nur dann zuverlässig, wenn in größeren Teilen der Bilder stationäre Szenenbestandteile abgebildet sind. Wenn in den Bilddaten jedoch weder stationäre Bestandteile noch starre Körper, dafür jedoch starkes Rauschen und große Bereiche ohne erkennbare Struktur enthalten sind, dann liefern die bekannten Verfahren unzureichende Stabilisierungsergebnisse. Derartige Bildsequenzen liegen beispielsweise vor, wenn maritime Szenen aufgenommen werden, die nur Wasser und Himmel enthalten.

Zur Stabilisierung von Bildsequenzen werden unterschiedliche Techniken eingesetzt. Die wesentlichen Verfahrensprinzipien werden im Folgenden beschrieben. Es werden nur diejenigen Methoden näher betrachtet, die wie das neue Verfahren bildgestützt, d. h. durch automatische Auswertung der Bilddaten, arbeiten.

Der wesentlichste Schritt bei einer bildgestützten Stabilisierung besteht in der Ermittlung der Transformation, die beschreibt, wie das jeweilige Bild transformiert werden muss, um stabilisiert zu werden. Durch Ermittlung aller Transformationen zwischen jeweils zwei aufeinander folgenden Bildern wird die Stabilisierung der gesamten Sequenz festgelegt. Im Wesentlichen können zwei Verfahrensprinzipien unterschieden werden, die jeweils noch viele Untervarianten aufweisen.

Das erste der beiden Verfahrensprinzipien basiert auf der Ermittlung von markanten Punkten oder Bildbereichen, die anschließend paarweise in zwei aufeinanderfolgenden Bildern zugeordnet werden. Zunächst werden hierbei mit einem speziellen Operator (z. B. Förstner-Operator) aus dem gesamten Bild einige Bildbereiche ausgewählt. Diese Auswahl verfolgt den Zweck, möglichst nur solche Bildbereiche zu verwenden, die sich möglichst eindeutig und möglichst genau lokalisierbar im nächsten Bild wiederfinden lassen. Dieses Wiederfinden kann durch verschiedene Methoden eines zweidimensionalen Mustervergleichs erfolgen. Häufig wird hier eine Kreuzkorrelation durchgeführt. Es wird ermittelt, welche der ausgewählten Bildregionen aus zwei aufeinanderfolgenden Bildern am besten übereinstimmen. Mit unterschiedlichen Strategien (z. B. RANSAC-Algorithmus) wird entschieden, welche Paare einander zuzuordnen sind. Hierbei wird beispielsweise angestrebt, dass die schließlich ausgewählten Zuordnungen möglichst gut einem festgelegten Transformationstyp (z. B. affine Transformation oder Translation) entsprechen. Schlecht passende Zuordnungen werden als Ausreißer betrachtet und nicht weiter berücksichtigt. Mit einer Ausgleichsrechnung (z. B. minimales Fehlerquadrat) werden mit Hilfe der ausgewählten Zuordnungen die Transformationsparameter bestimmt.

Bei der zweiten der beiden bekannten Verfahrensprinzipien werden nicht nur ausgewählte Bildbereiche, sondern alle Pixel des Bildes entsprechenden Stellen im anderen Bild zugeordnet. Für die Zuordnung werden auch hier unterschiedliche Verfahren des zweidimensionalen Mustervergleichs herangezogen (z. B. Kreuzkorrelation). Auf diese Weise entsteht ein sogenanntes Verschiebungsvektorfeld, d. h. für jedes Pixel wird ein Verschiebungsvektor ermittelt, der ausdrücken soll, wie sich der Bildinhalt von einem Bild zum nächsten verschoben hat. Ein so ermitteltes Verschiebungsvektorfeld enthält meistens auch eine bestimmte Anzahl von Verschiebungsvektoren, die unzuverlässig oder falsch sind, da sich die betreffende Bildregion nicht eindeutig zuordnen lässt (z. B. bei homogenen Bereichen). Daher werden verschiedene Verfahren angewandt, die unzuverlässigen Vektoren zu ermitteln und zu korrigieren, beispielsweise durch Glättung. Bei anderen Varianten wird untersucht, ob eine relativ sichere Zuordnung vorliegt (z. B. ausgeprägtes Maximum der Kreuzkorrelation). Bei unsicherer Zuordnung kann der Bewegungsvektor von der weiteren Betrachtung ausgeschlossen werden. Analog zum oben aufgeführten ersten Verfahrensprinzip werden schließlich mit einer Ausgleichsrechnung (z. B. minimales Fehlerquadrat) die Transformationsparameter bestimmt.

Bei beiden Verfahrensprinzipien wird eine Zuordnung von Bildbereichen durchgeführt, entweder beschränkt auf die ausgewählten Bereiche (erstes Verfahrensprinzip) oder systematisch über das gesamte Bild hinweg (zweites Verfahrensprinzip). In beiden Fällen wird jeweils ein begrenzter (meistens rechteckiger) Bildausschnitt eines Bildes betrachtet, und danach gesucht, an welcher Stelle des nächsten Bildes ein möglichst ähnliches Muster vorliegt. Zur Beschränkung des Aufwands werden hierbei eine maximale horizontale und eine maximale vertikale Verschiebung ±Δxₘₐₓ bzw. ±Δyₘₐₓ zugrunde gelegt. Es ergeben sich daher (2 Δxₘₐₓ+1) (2 Δyₘₐₓ+1) ganzzahlige Verschiebungen, die in Betracht kommen. Durch einen Mustervergleich wird die Ähnlichkeit oder Unähnlichkeit der jeweils entsprechend verschobenen Bildausschnitte überprüft, wobei sich für jede Verschiebung jeweils eine Bewertungsgröße ergibt. Bei beiden Verfahrensprinzipien wird ermittelt, welche der Verschiebungen am besten passt, indem je nach verwendetem Bewertungskriterium das Maximum (z. B. bei einer Korrelation) oder das Minimum (z. B. bei der Summe quadrierter Differenzen) gesucht wird. Dieser Vorgang ist kritisch und unzuverlässig, wenn kein eindeutiges Maximum bzw. Minimum vorliegt.

Aufgabe des erfindungsgemäßen Verfahrens und seiner technischen Ausführung ist es, auch für Bildsequenzen kontrastarmen Inhalts eine zuverlässige Bildstabilisierung zu erreichen.

Die Lösung der Aufgabe gelingt mit einem Verfahren nach Anspruch 1 und einer Einrichtung, wie sie im Nebenanspruch 18 angegeben ist. Die Erfindung wird durch Unteransprüche vorteilhaft weiter ausgebildet.

Das neue Verfahren zur Bildstabilisierung stützt sich nicht mehr wie bisher auf eine Zurodnung von Bildbereichen, sondern verzichtet auf die Auswahl markanter Bildregionen. Stattdessen stützt es sich auf das gesamte Bild, wobei Modifikationen möglich sind.

Die Generierung eines Verschiebungsvektorfeldes, das unter schwierigen Umständen üblicherweise auch viele fehlerhafte Vektoren enthält und dann zu falschen Transformationsparametern führt, ist zukünftig verzichtbar.

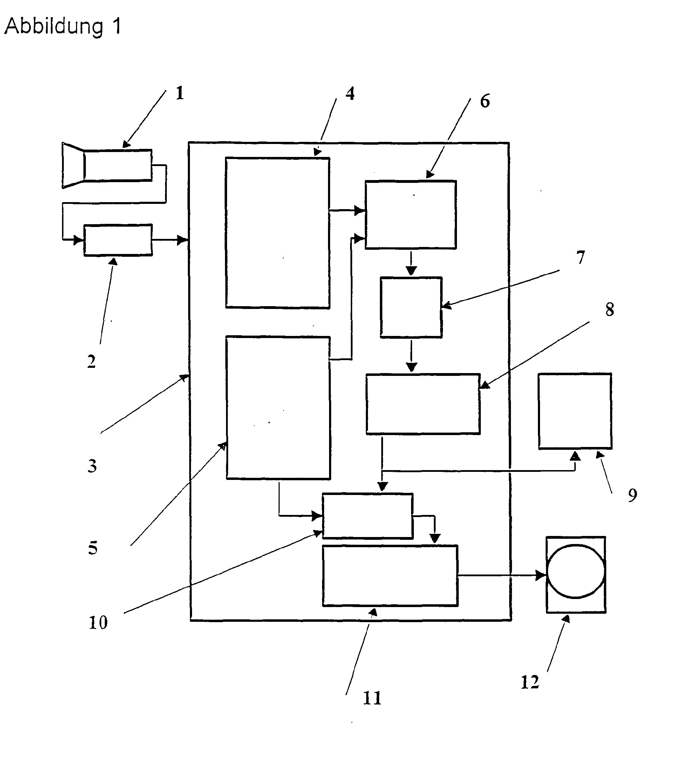

Nachfolgend wird die Erfindung unter Bezugnahme auf die Abbildung 1 im Einzelnen erläutert.

Es zeigt die
- Abbildung 1: das Blockschaltbild des Erfindungsgegenstandes

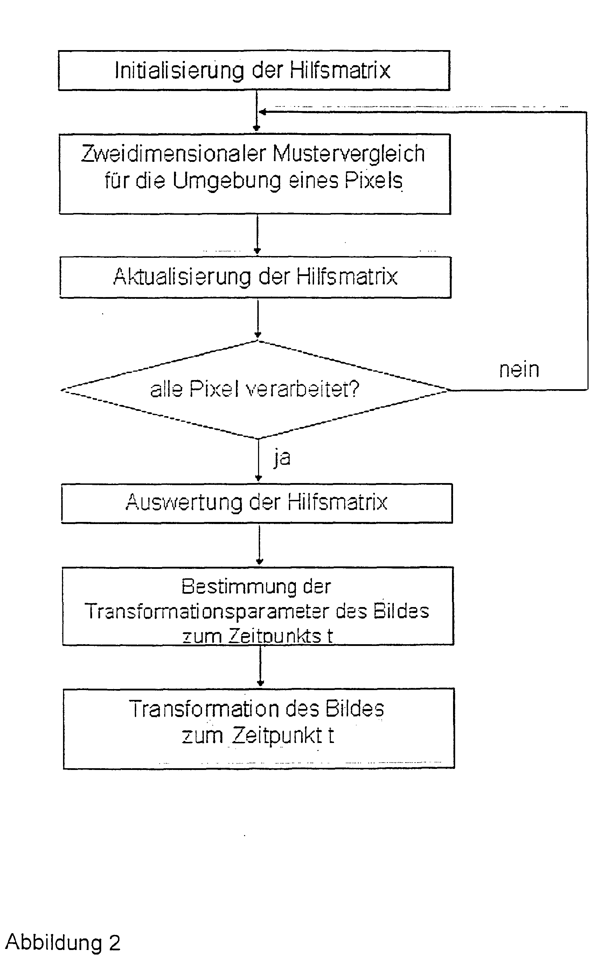

- Abbildung 2: ein Flussdiagramm des Verfahrens

Wie in der Abbildung 1 gezeigt ist, wird beim neuen Verfahren eine gesamte, in einem Analog-Digitalwandler 2 digitalisierte Bildsequenz einer Kamera 1 eines Zeitpunkts t-1, einem in der Bildstabilisierungseinheit 3, die nach dem erfindungsgemäßen Programm gesteuert ist, integrierten Bildspeicher zur Speicherung der einzelnen Bilder der Sequenz 4 zugeleitet, von dem sie aus Pixel für Pixel in einem zweidimensionalen Mustervergleicher 6 untersucht werden, um zu ermitteln, wie gut eine um das jeweils betrachtete Pixel herum zentrierte Nachbarschaftsregion jeweils mit verschieden verschobenen Nachbarschaftsregionen des nächsten Bildes zum Zeitpunkt t übereinstimmt. Als Nachbarschaftsregionen werden zum Beispiel rechteckige Bereiche der Größe m x n Pixel verwendet (sinnvolle Größen sind z. B. m=n=15). Zur Beschränkung des Aufwands werden eine maximale horizontale und eine maximale vertikale Verschiebung ±ΔXₘₐₓ bzw. ±Δyₘₐₓ zugrunde gelegt. Es ergeben sich daher ((2Δxₘₐₓ+1)(2Δyₘₐₓ+1) ganzzahlige Verschiebungen, die in Betracht gezogen werden.

Die Ähnlichkeit der jeweils entsprechend verschobenen Bildausschnitte wird zum Beispiel durch eine zweidimensionale, normierte Kreuzkorrelation berechnet. Der Wertebereich, der sich bei der normierten Kreuzkorrelation ergebenden Korrelationskoeffizienten liegt zwischen -1 und 1. Der maximale Wert von 1 ergibt sich, wenn die Bildausschnitte identisch sind oder bis auf eine lineare Grauwerttransformation (Gain > 0, Offset beliebig) identisch sind. Im Gegensatz zur Vorgehensweise nach dem Stand der Technik wird bei der neuen Technik nicht das Maximum gesucht und dann die zugehörige Verschiebung weiter betrachtet, sondern es werden alle (2Δxₘₐₓ+1)(2Δyₘₐₓ+1) Korrelationswerte, die sich bei der Untersuchung der Nachbarschaftsregion eines Pixels ergeben, weiterverwendet. Hierzu wird eine Hilfsmatrix 7 der Größe (2Δxₘₐₓ+1)(2Δyₘₐₓ+1) angelegt, die zunächst mit Null initialisiert wird. Für jedes Pixel werden die sich bei der Ähnlichkeitsuntersuchung des entsprechenden Nachbarschaftsbereichs ergebenden Korrelationswerte in dieser Hilfsmatrix 7 aufaddiert. Nachdem Pixel für Pixel das gesamte Bild untersucht und jeweils die Hilfsmatrix 7 entsprechend aktualisiert wurde, wird die Hilfsmatrix 7 ausgewertet.

Es wird ermittelt, welche dem gesamten Bild entsprechende Verschiebung (Δx, Δy) vorliegt. Hierzu wird das Maximum der Hilfsmatrix 7 und die hierzu entsprechende Verschiebung in einer programmgesteuerten Rechenstufe 8 gesucht.

Die ermittelte Verschiebung (Δx, Δy) drückt die Transformation des Bildes zum Zeitpunkt t-1 zum Bild des Zeitpunkts t aus. Um eine Stabilisierung zu erreichen, muss diese Transformation invertiert werden, d. h. das Bild des Zeitpunkts t muss gegenüber dem Bild des Zeitpunkts t-1 um (-Δx, -Δy) verschoben werden. Seine Speicherung erfolgt im Bildspeicher 5.

Die von der Bildstabilisierung gelieferte Bild-zu-Bild-Transformation, d. h. hier der Verschiebungsvektor, kann auf verschiedene Weise genutzt werden. Für eine Nutzung der Bilddaten durch automatische Verfahren ist die Generierung einer stabilisierten Sequenz nicht unbedingt erforderlich. Wenn dies vom automatischen Verfahren entsprechend genutzt werden kann, dann reicht die Übergabe der Transformationsparameter aus, ohne dass tatsächlich irgendwelche Bilder erstellt werden müssen. Eine Ausgabe erfolgt über eine Schnittstelle 9. Bei einer Nutzung durch Beobachter muss hingegen eine neue, stabilisierte Bildfolge erstellt werden. Dies erfolgt über eine programmgesteuerte Rechenstufe zur Transformation des Bildes im Zeitpunkt t 10. Hierzu gibt es verschiedene Verfahren, je nachdem, auf welche Ausrichtung und Größe sich das zu erstellende Bildmaterial beziehen soll. Zu seiner Speicherung ist der Bildspeicher 11 vorgesehen. Das dem neu erstellten Bild entsprechende Gesichtsfeld kann beispielsweise so groß bemessen werden, dass bei den zu erwartenden Bewegungen das Bild nach der Stabilisierung nicht aus dem Großbild herausbewegt wird. Hierbei kann das tatsächliche Bild im Verhältnis zum Großbild jedoch sehr klein werden. Für einen Beobachter sind nur sich sehr schnell ändernde Ausrichtungsänderungen (Verwackeln, ruckartige Bewegungen) störend. Langsame Schwenks müssen nicht unbedingt kompensiert werden. Daher können die Bild-zu-Bild-Transformationen zeitlich gefiltert werden (Hochpass), so dass nur noch die hochfrequenten Störungen stabilisiert werden. Auf diese Weise ergibt sich eine Bildfolge, die den Schwenks folgt, die Zitterbewegungen jedoch unterdrückt. Die Weitergabe erfolgt über die Schnittstelle zur Ausgabe der stabilisierten Bildfolge 12 zur Visualisierung oder an anderes Gerät, das die stabilisierte Bildsequenz nutzt.

Ergänzend / alternativ zur oben beschriebenen Variante sind weitere Ausprägungen des Verfahrens möglich.
- Bei starken geometrischen Bildverzeichnungen kann eine Verbesserung der Bildstabilisierung erreicht werden, wenn die Bilddaten vor der Bildstabilisierung geometrisch entzerrt werden.
- Wenn starke sensorbedingte Bildstörungen (z. B. tote Pixel) auftreten, wird eine Verbesserung der Bildstabilisierung mittels einer vor der Bildstabilisierung eingefügten Bildverbesserung zur Korrektur der sensorbedingten Störungen erreicht.
- Es müssen nicht unbedingt alle Pixel des gesamten Bildes bearbeitet werden. Zur Beschränkung des Aufwands wird vorgeschlagen, ein Bildausschnitt und/oder eine in bestimmten horizontalen und vertikalen Abständen (z. B. jedes 2. oder jedes 3. Pixel) dem Bild entnommene Untermenge aller Pixel, als Zentrum von Nachbarschaftsregionen heranzuziehen.
- Anstelle der Bearbeitung des gesamten Bildes zur Ermittlung des Verschiebungsvektors für das gesamte Bild ist es möglich, das Bild in geeignete Bereiche zu unterteilen, die jeweils eine vergleichbare Verschiebung haben. Für jeden dieser Bereiche wird dann ein eigener Verschiebungsvektor ermittelt.
- Zur Beschränkung des Aufwands bietet sich auch eine Auflösungspyramide der Bilddaten an. Hierbei werden durch zweidimensionale örtliche Filterung und anschließende Unterabtastung von den ursprünglichen Bilddaten ausgehend sukzessive Bilder geringerer örtlicher Auflösung und geringerer Pixelzahl generiert.
   Zur Ermittlung des Verschiebungsvektors der Originaldaten wird zunächst bei schlecht aufgelösten Bilddaten begonnen und dort mit geringem Rechenaufwand eine Näherungslösung ermittelt. Diese Näherungslösung dient dann als Grundlage, ein besser aufgelöstes Bild schneller verarbeiten zu können, indem nur noch solche Verschiebungen zu beachten sind, die mit der gefundenen Näherungslösung nicht im Widerspruch stehen.
- Anstelle der additiven Verknüpfung der Korrelationswerte in der Hilfsmatrix sind auch andere Verknüpfungen möglich, z. B. eine multiplikative Verknüpfung.
- Statt dem Korrelationskoeffizienten sind auch andere Verfahren des zweidimensonalen Mustervergleichs einsetzbar, insbesondere
   o die nicht normierte Korrelation,
   o die Summe von quadrierten Differenzen,
   o die Summe der betragsmäßigen Differenzen.
- Vor der Auswertung der Hilfsmatrix empfiehlt sich eine zweidimensionale Glättung.
- Anstelle von rechteckigen Nachbarschaftsbereichen sind für den zweidimensionalen Mustervergleich auch Nachbarschaftsbereiche anderer Form (z. B. kreisförmig, hexagonal, elliptisch) möglich.
- Neben der Ermittlung des Maximums der Hilfsmatrix ist alternativ eine gewichtete lineare oder nichtlineare Mittelung der Korrelationswerte in der Hilfsmatrix anwendbar, so dass sich eine subpixelgenaue Verschiebung ergibt.
- Die Ermittlung des Maximums der Hilfsmatrix kann zunächst durch Ausgleichsrechnung eine Anpassung an eine zweidimensionale Funktion eines vorzugebenden Typs (z. B. Polynom zweiten Grades) erfolgen. Durch analytische Ermittlung des Maximums dieser Funktion wird dann die Verschiebung subpixelgenau ermittelt.
- Wahlweise der Möglichkeit fest vorgegebene und für die gesamte Sequenz gleich bleibende maximale horizontale und vertikale Verschiebungen zugrunde zu legen, sind die zu berücksichtigenden Verschiebungen auch aus den ermittelten Verschiebungen der zurückliegenden Zeitpunkte ableitbar. Hierbei ist es insbesondere möglich:

- Ersatzweise fester, symmetrisch um den Nullpunkt angeordneter maximaler Verschiebungen ±Δxₘₐₓ bzw. ±Δyₘₐₓ, werden Verschiebungen verwendet, die symmetrisch um die zuletzt festgestellte Verschiebung (Δx', Δy') angeordnet sind, d. h. von Δx'- Δxₘₐₓ bis Δx'+ Δxₘₐₓ und von Δy'- Δyₘₐₓ bis Δy'+ Δyₘₐₓ.
- Die aus den bereits verarbeiteten Bilddaten ermittelten Verschiebungen werden als eindimensionale zeitabhängige Funktion betrachtet. Durch Schätzfilter (z. B. Kalman-Filter) können die aktuell zu erwartende bzw. die maximal zu berücksichtigenden Verschiebungen abgeschätzt werden.

### BEZUGSZEICHENLISTE

- 1: Kamera
- 2: Analog-Digital-Wandler
- 3: Nach erfindungsgemäßem Programm gesteuerte Bildstabilisierungseinheit
- 4: Bildspeicher zur Speicherung des Bildes des Zeitpunkts t-1
- 5: Bildspeicher zur Speicherung des Bildes des Zeitpunkts t
- 6: Zweidimensionaler Mustervergleicher
- 7: Hilfsmatrix zur Akkumulation der Einzelergebnisse des zweidimensionalen Mustervergleichers
- 8: Programmgesteuerte Rechenstufe zur Bestimmung der für Bild t auszuführenden Transformation durch Auswertung der Hilfsmatrix
- 9: Schnittstelle zur automatischen Weiterverarbeitung unter Nutzung der Transformationsparameter
- 10: Programmgesteuerte Rechenstufe zur Transformation des Bildes des Zeitpunkts t
- 11: Bildspeicher zur Speicherung des transformierten Bildes des Zeitpunkts t
- 12: Schnittstelle zur Ausgabe der stabilisierten Bildfolge zur Visualisierung oder an anderes Gerät, das die stabilisierte Bildsequenz nutzt

## Patentansprüche

1. Verfahren zur Stabilisierung von digitalen Bildsequenzen nach einer bildgestützten Transformationsvorschrift, bei dem:
a) das gesamte Bild des Zeitpunkts t-1 Pixel für Pixel untersucht und ermittelt wird, wie gut eine um das jeweils betrachtete Pixel herum zentrierte Nachbarschaftsregion jeweils mit verschieden verschobenen Nachbarschaftsregionen des nächsten Bildes zum Zeitpunkt t übereinstimmt,
b) die Ähnlichkeit der jeweils entsprechend verschobenen Bildausschnitte durch eine zweidimensionale, normierte Kreuzkorrelation berechnet wird,
c) eine Hilfsmatrix der Größe (2Δxₘₐₓ+1)(2Δyₘₐₓ+1) angelegt wird, welche zunächst mit Null initialisiert wird und mit allen der sich bei der Untersuchung der Nachbarschaftsregion eines Pixel bei der Ähnlichkeitsuntersuchung des entsprechenden Nachbarschaftsbereichs ergebenden (2Δxₘₐₓ+1)(2Δyₘₐₓ+1) Korrelationswerten aufaddiert wird,
d) aus den Werten der Hilfsmatrix das Maximum gesucht wird, um die hierzu gehörende, dem gesamten Bild entsprechende Verschiebung (Δx,Δy) zu ermitteln,
e) die Transformation der ermittelten Verschiebung (Δx,Δy) des Bildes zum Zeitpunkt t invertiert erfolgt, indem das Bild des Zeitpunkts t gegenüber dem Bild des Zeitpunkts t-1 um (-Δx, -Δy) verschoben wird,
f) die von der Bildstabilisierung gelieferte Bild-zu-Bild-Transformation, d. h. hier der Verschiebungsvektor, für eine Nutzung der Bilddaten durch automatische Verfahren ausgegeben wird.

2. Verfahren nach Anspruch 1, **dadurch gekennzeichnet, dass** die Bilddaten vor der Bildstabilisierung geometrisch entzerrt werden.

3. Verfahren nach Anspruch 1 oder 2, **dadurch gekennzeichnet, dass** vor der Bildstabilisierung eine Bildverbesserung zur Korrektur der sensorbedingten Störungen durchgeführt wird.

4. Verfahren nach einem der Ansprüche 1 bis 3, **dadurch gekennzeichnet, dass** nur ein Bildausschnitt und/oder eine in bestimmten horizontalen und vertikalen Abständen (z. B. jedes 2. oder jedes 3. Pixel) dem Bild entnommene Untermenge aller Pixel als Zentrum von Nachbarschaftsregionen herangezogen werden.

5. Verfahren nach einem der Ansprüche 1 bis 4, **dadurch gekennzeichnet, dass** anstelle der Bearbeitung des gesamten Bildes zur Ermittlung des Verschiebungsvektors für das gesamte Bild, das gesamte Bild oder ein Bildausschnitt in geeignete Bereiche jeweils vergleichbarer Verschiebung unterteilt wird, für die dann jeweils ein eigener Verschiebungsvektor ermittelt wird.

6. Verfahren nach einem der Ansprüche 1 bis 5, **dadurch gekennzeichnet, dass** eine Auflösungspyramide der Bilddaten verwendet wird, wobei durch zweidimensionale örtliche Filterung und anschließende Unterabtastung von den ursprünglichen Bilddaten ausgehend, sukzessiv Bilder geringerer örtlicher Auflösung und geringerer Pixelzahl generiert werden, die zur Ermittlung des Verschiebungsvektors der Originaldaten zunächst bei schlecht aufgelösten Bilddaten beginnend ausgewertet werden, um dort mit geringem Rechenaufwand eine Näherungslösung zu ermitteln, die dann dazu verwendet wird, ein besser aufgelöstes Bild schneller verarbeiten zu können, indem nur noch solche Verschiebungen zu betrachten sind, die mit der gefundenen Näherungslösung nicht im Widerspruch stehen.

7. Verfahren nach einem der Ansprüche 1 bis 6, **dadurch gekennzeichnet, dass** anstelle der additiven Verknüpfung der Korrelationswerte in der Hilfsmatrix eine multiplikative Verknüpfung vorgenommen wird.

8. Verfahren nach einem der Ansprüche 1 bis 7, **dadurch gekennzeichnet, dass** statt dem Korrelationskoeffizienten die nicht normierte Korrelation zum zweidimensionalen Mustervergleich herangezogen wird.

9. Verfahren nach einem der Ansprüche 1 bis 8, **dadurch gekennzeichnet, dass** statt dem Korrelationskoeffizienten die Summe von quadrierten Differenzen zum zweidimensionalen Mustervergleich herangezogen wird.

10. Verfahren nach einem der Ansprüche 1 bis 9, **dadurch gekennzeichnet, dass** statt dem Korrelationskoeffizienten die Summe der betragsmäßigen Differenzen zum zweidimensionalen Mustervergleich herangezogen wird.

11. Verfahren nach einem der Ansprüche 1 bis 10, **dadurch gekennzeichnet, dass** vor der Auswertung der Hilfsmatrix eine zweidimensionale Glättung erfolgt.

12. Verfahren nach einem der Ansprüche 1 bis 11, **dadurch gekennzeichnet, dass** anstelle von rechteckigen Nachbarschaftsbereichen für den zweidimensionalen Mustervergleich auch Nachbarschaftsbereiche anderer Form (z. B. kreisförmig, hexagonal, elliptisch) verwendet werden.

13. Verfahren nach einem der Ansprüche 1 bis 12, **dadurch gekennzeichnet, dass** anstelle der Ermittlung des Maximums der Hilfsmatrix eine gewichtete lineare oder nichtlineare Mittelung der Korrelationswerte in der Hilfsmatrix erfolgt, so dass sich eine subpixelgenaue Verschiebung ergibt.

14. Verfahren nach einem der Ansprüche 1 bis 13, **dadurch gekennzeichnet, dass** anstelle der Ermittlung des Maximums der Hilfsmatrix zunächst durch Ausgleichsrechnung eine Anpassung an eine zweidimensionale Funktion eines vorzugebenden Typs (z. B. Polynom zweiten Grades) erfolgt und durch analytische Ermittlung des Maximums dieser Funktion dann die Verschiebung subpixelgenau ermittelt wird.

15. Verfahren nach einem der Ansprüche 1 bis 14, **dadurch gekennzeichnet, dass** anstelle von fest vorgegebenen und für die gesamte Sequenz gleich bleibenden maximalen horizontalen und vertikalen Verschiebungen, die zu berücksichtigenden Verschiebungen aus den ermittelten Verschiebungen der zurückliegenden Zeitpunkte abgeleitet werden.

16. Verfahren nach Anspruch 15, **dadurch gekennzeichnet, dass** anstelle fester, symmetrisch um den Nullpunkt angeordneter maximaler Verschiebungen ±Δxₘₐₓ bzw. ±Δyₘₐₓ Verschiebungen verwendet werden, die symmetrisch um die zuletzt festgestellte Verschiebung (Δx', Δy') angeordnet sind, d. h. von Δx'-Δxₘₐₓ bis Δx'+Δxₘₐₓ und von Δy'-Δyₘₐₓ bis Δy'+Δyₘₐₓ.

17. Verfahren nach Anspruch 15, **dadurch gekennzeichnet, dass** die aus den verarbeiteten Bilddaten ermittelten Verschiebungen als eindimensionale zeitabhängige Funktion gelten, aus denen durch Schätzfilter (z. B. Kalman-Filter) die aktuell zu erwartende bzw. die maximal zu berücksichtigenden Verschiebungen abgeleitet werden.

18. Einrichtung für das Verfahren nach einem der Ansprüche 1 bis 17, **gekennzeichnet durch** Kamera (1),
Analog-Digital-Wandler (2),
nach erfindungsgemäßem Programm gesteuerte Bildstabilisierungseinheit (3),
Bildspeicher zur Speicherung des Bildes des Zeitpunkts t-1 (4),
Bildspeicher zur Speicherung des Bildes des Zeitpunkts t (5),
zweidimensionaler Mustervergleicher (6),
Hilfsmatrix zur Akkumulation der Einzelergebnisse des zweidimensionalen Mustervergleichers (7),
programmgesteuerte Rechenstufe zur Bestimmung der für Bild t auszuführenden Transformation **durch** Auswertung der Hilfsmatrix (8),
Schnittstelle zur automatischen Weiterverarbeitung unter Nutzung der Transformationsparameter (9),
programmgesteuerte Rechenstufe zur Transformation des Bildes des Zeitpunkts t (10),
Bildspeicher zur Speicherung des transformierten Bildes des Zeitpunkts t (11), Schnittstelle zur Ausgabe der stabilisierten Bildfolge zur Visualisierung oder an anderes Gerät, das die stabilisierte Bildsequenz nutzt (12).

19. Verwendung des Verfahrens nach einem der Ansprüche 1 bis 17, zur Stabilisierung von Bildsequenzen eines nicht starr ausgerichtet bildgebenden Sensors, der mit einem bewegten Träger verbunden ist.

20. Verwendung des Verfahrens nach einem der Ansprüche 1 bis 17, zur Stabilisierung von Bildsequenzen bildgebender Sensoren im maritimen Bereich.

21. Computerprogramm erstellt mit Programmcode-Mitteln, zur Durchführung des Verfahrens gemäß den Ansprüchen 1 bis 17, wenn das Programm auf einer Computereinrichtung ausgeführt wird.

22. Computerprogramm mit Programmcode-Mitteln gemäß den Ansprüchen 1 bis 17, die auf einem computerlesbaren Datenträger gespeichert sind.
